(19) Europäisches Patentamt
European Patent Office
Office européen des brevets

(11) EP 4 451 075 A1

(12) **EUROPEAN PATENT APPLICATION**

(43) Date of publication:
**23.10.2024 Bulletin 2024/43**

(21) Application number: **23168962.1**

(22) Date of filing: **20.04.2023**

(51) International Patent Classification (IPC):
**G05B 19/418** (2006.01)  **G06N 3/04** (2023.01)

(52) Cooperative Patent Classification (CPC):
**G05B 19/41875;** G05B 2219/32193;
G05B 2219/45026; G06N 3/045

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventors:
• **Krompaß, Denis**
**85591 Vaterstetten (DE)**
• **Eichler, Roman**
**90451 Nürnberg (DE)**
• **Mallandur, Adarsh**
**91052 Erlangen (DE)**

(74) Representative: **Siemens Patent Attorneys**
**Postfach 22 16 34**
**80506 München (DE)**

(54) **A METHOD FOR MONITORING A PRODUCTION OF AN ELECTRONIC COMPONENT BY A MONITORING SYSTEM, A COMPUTER PROGRAM PRODUCT, A COMPUTER-READABLE STORAGE MEDIUM AS WELL AS A MONITORING SYSTEM**

(57) The invention relates to a method for monitoring a production of an electronic component (38), comprising the steps of:
- receiving data (32) from an automatic optical inspection device (82), wherein the data (32) comprise a plurality of features describing the electronic component (38);
- providing a neural network (36), wherein the neural network (36) is configured for calculating data with a preset size;
- determining the size of the received data (32);
- comparing the determined size of the data with the preset size for the neural network (36);
- padding the received data (32) such that a data vector (14) is generated in the size of the preset size;
- generating a mask (10), wherein the mask (10) describes the data vector (14) concerning the received data (32) and the padding (16);
- transmitting the data vector (14) and the mask (10) to the neural network (36);
- analyzing the electronic component (38) depending on the data vector (14); and
- monitoring the electronic component (38) depending on the analyzation.

Furthermore, the invention relates to a computer program product, a computer-readable storage medium as well as a monitoring system (30).

FIG 2

**Description**

Independent of the grammatical term usage, individuals with male, female or other gender identities are included within the term.

The invention relates to a method for monitoring a production of an electronic component by a monitoring system according to the independent claim 1. Furthermore, the invention relates to a computer program product, a computer-readable storage medium as well as a monitoring system.

In the state of the art so-called automated optical inspection (AOI) is known, which is an automated visual inspection of a printed circuit board (PCB) or LCD, or transistor manufacturer where a camera autonomously scans the device under test for both catastrophic failure, for example missing component, and quality defects, for example fillet size or shape or component skew. It is commonly used in the manufacturing process because it is a non-contact test method. It is implemented at many stages through the manufacturing process including bare board inspection, solo paste inspection (SPI), pre-reflow and post-reflow as well as other stages.

Historically, the primary place for AOI systems has been after solder reflow or post production. Mainly because, post-reflow AOI systems can inspect for most types of defects, for example component placement, solder shorts, missing solder or furthermore, at one place in the line with one single system. In this way the faulty boards are reworked and the other boards are sent to the next process stage.

For manufacturers that deploy AOI machines in their assembly lines, a major concern is the high rate of pseudo errors these AOI machines report. Consequently, a manual process must be employed to inspect the rejected PCBs and finally decide which boards can proceed to the next stage, which may be regarded as a pseudo error, or which are reworked, which may be regarded as a real error. An automation of this manual process is desired, and there exist many AI-based works that target the problem of defect detection on PCBs but they rely on images, as the AOI machine and humans. Unfortunately, many AOI machine vendors prohibit the access to the images recorded by the AOI machines and solely store and allow access to trades extracted from the images by their undisclosed algorithms that contain information about the board, its components and component pins. As an alternative to replacing the AOI machine, one option is to use the data produced by the AOI machine to find patterns that discriminate pseudo errors, in particular so-called false-positives, from real errors and in this way reduce the amount of manual post AOI inspections of PCBs. Currently, no specialized AI-based approach that can interface with the special data structures produced by AOI machines are available.

It is an object of the invention to provide a method, a computer program product, a computer-readable storage medium as well as a monitoring system, by which the amount of false-positive errors from a production of an electronic component is automatically minimized.

This object is solved by a method, a computer program product, a computer-readable storage medium as well as a monitoring system according to the independent claims. Advantageous forms of embodiments are presented in the dependent claims.

One aspect of the invention relates to a method for monitoring a production of an electronic component by a monitoring system. Data from an automatic optical inspection device (AOI) are received by an electronic computing device of the monitoring system, wherein the data comprise a plurality of features describing the electronic component. A neural network is provided by the electronic computing device, wherein the neural network is configured for calculating data with a preset size. The size of the received data is determined by the electronic computing device. The determined size of the data is compared with the preset size for the neural network by the electronic computing device. The received data is padded such that a data vector is generated in the size of the preset size by the electronic computing device. A mask is generated by the electronic computing device, wherein the mask describes the data vector concerning the received data and the padding. The data vector and the mask are transmitted to the neural network. The electronic component is analyzed depending on the data vector by the neural network. The electronic component is monitored depending on the analyzation.

Therefore, an approach is provided that can interface with the special data structures produced by AOI machines, wherein a special data structure is targeted produced by the AOI machines. Therefore, alternatively to replacing the AOI machine, one option is to use the data produced by the AOI machine to find patterns that discriminate pseudo errors, in particular so-called false-positives, from real errors and in this way reduce the amount of manual post AOI inspections of PCBs. According to the state of the art, no specialized AI-based approach that can interface with the special data structures produced by AOI machines is available.

In particular, padding is a technique applied when data of multiple measurements needs to be passed at once to a neural network. This is generally the case during model training. But not a necessity when the trained model is applied later on in production.

In particular, the AOI machines in this invention are characterized by large library of test patterns which are replied in an AOI routine to detect deficiencies in the inspected test windows of a printed circuit board as the electronic component. Furthermore, also LCD (Liquid Crystal Display) or transistors may be an electronic component. The test patterns, which may also be referred to as macros, are a combination of a detection algorithm and a configuration of that algorithm which is often specific for a component type of specific design from a specific window. Consequently, there exist thousands of these test patterns. When applied on a PCB/electronic component each test-pattern produces a measurement data point, which contains meta information about the measurement itself, for example what macro, what time, what board, or furthermore, and the outputs from the applied detection algorithm represents by features. As an example, a data format with a maximum of 128 features is provided. The 128 features may actually be seen as a feature slot where the configuration of the test-pattern is setting which of these slots are used and what kind of features are recorded. Normally it is a subset of the 128 possible slots. Note though that there is no order in the sense that for example feature 1 of test-pattern 1 is not comparable to the feature 1 of test-pattern 2. Also, there is no order in the numeration of features with respect to the order they are recorded. Another peculiarity of this data is that it contains missing data by design. The features of a test-pattern are not measured in parallel but in sequence. If a measured feature value causes the detection algorithm to report an error, the measurement process is stopped. This means that the remaining features are not measured and are for this reason missing for that measurement of the test-pattern. Unfortunately, all feature slots where no values are measured contain the same default value independent if they would have been used by the test-pattern or not, so they can not be distinguished. To summarize, each measurement, in particular a window where a test-pattern is applied, produces meta data and variable size set of feature values.

The goal of the invention is to present the data provided by a measurement in a way that allows to contextualize the neural network on which test-pattern is used without explicitly using a discrete indicator variable but use general properties of test-patterns to encode them implicitly. This has the advantage that the model could be applied to unseen-test-pattern measurement without the need of retraining. It is proposed to use properties of the measured features to provide this contextualization on the test-pattern to the neural network. The assumption here is that test-patterns can be distinguished by the features they use, the distribution of measured values and on which component type they are applied. Since any meta information about the features that could be used to compare and cluster features across test-patterns is not available or is tedious to collect, a representation that describes this relationship between features must be learned by the model.

For this reason, each feature j from the $i_{th}$ measurement is presented by a vector f by an encoding of the component type and it is applied on a statistic about the values of it has measured in the context of test-pattern. Note so that the position of the test-pattern, meaning if it is feature 1 or feature 5 is ignored since no order is assumed. Further, the feature may be contextualized by the component rotation and the kind of error the AOI machine has reported which are provided also by the meta information of the measurement. The embedding / encoding of the rotation, the component type and the error of the AOI machine has reported can either be a one-hot encoding or learned as a part of the model.

Giving the input representation of a single feature and its value the input representation can be composed for a batch of test-pattern measurements required for the training of the neural network later on. Since each measurement contains a variable size set of features, even if they are from the same test-pattern, same sized inputs are produced by using for example a zero-padding for the measurements that have less feature values. In addition, a binary mask array which indicates which position the data arrays contained padding is produced. This mask is also fed as an input to the neural network and provide the means to ignore the padding when processing the input data.

The neural network may also be regarded as the model. In general, the false-report of reduction use-case data sets are characterized by a high class imbalance, which means that there is an imbalance between board inspections where the AOI machine reported a pseudo error (majority) and a real error (minority). Besides training the pseudo/real error classification model, which uses the neural network architecture described, with off-the-shelf stochastic gradient-based optimization methods, additional measures are used to tackle this class-imbalance. For example, the batches are balanced of examples via resampling the minority class (real error), during model training such that between 10 percent and 50 percent of the examples in the batch are boards with real errors. In case the training data consists of different AOI test-patterns the batches are additionally balanced via resampling such that during training, the model is exposed to all AOI test-patterns at similar frequency. Second, the loss function is employed, which further improves training results when training with imbalanced data sets. For this purpose all encoders used are trained end-to-end, in particular all at once and not independently in a sequential manner.

The present method is targeting automated false-positive reduction which directly decreases the manual effort of reinspection of the PCBs/electronic components that were classified as errors by the AOI machine.

The advantage of this approach over other data-based approaches is that one model can be trained and applied on multiple AOI test-patterns at once. This decreases the maintenance effort for such a solution tremendously in comparison to maintaining one model per AOI test-pattern. In addition, since this modeling approach makes minimal assumptions about the data it must learn similarities between AOI test-patterns and transfer knowledge between them. This means that in the long run, as more data is added for training the system, the data requirements for achieving a good quality prediction for unseen AOI test-patterns gradually decreases since the model has more knowledge it can reuse from observing the data of other AOI test-patterns. Eventually the model could get so powerful it may generalize instantly on data of unseen test-patterns. In contrast, with letting a single model per AOI test-pattern the data requirements per test-pattern, in particular there are thousands, stay the same and no learned knowledge from the AOI test-patterns is reused.

According to an embodiment the electronic component is analyzed in such that the electronic component is classified in erroneous component or in a non-erroneous component. In particular, the electronic component is analyzed in such, that a real error and/or a pseudo error is classified. Therefore, minimizing pseudo-errors in the production of the electronic component is provided.

In another embodiment a classification of the automatic optical inspection device is taken into consideration by the electronic computing device. In particular, just an electronic component, which is classified from the automatic optical inspection device as erroneous, is analyzed by the electronic computing device. In particular, if the automatic optical inspection device provides the electronic component as non-erroneous no inspection/no monitoring of the monitoring system is provided. Just, if the automatic optical inspection device classifies the electronic component as erroneous, the monitoring system is monitoring these electronic components. The monitoring system then is configured for classifying the electronic components such, that a pseudo-error or a real error of the AOI is detected by the monitoring system. Therefore, minimizing pseudo errors is provided.

In another embodiment the received data is encoded before determining the size of the received data. In particular, also the feature is contextualized by the component rotation and the kind of error the AOI machine has reported which are provided also by the meta information of the measurement. The embedding/encoding of the rotation, the component type and the error the AOI machine has reported can either be a one-hot encoding or learned as part of the model. Therefore, the pseudo error can be minimized.

In another embodiment the received data is encoded considering at least a rotation of the electronic component and/or a component type and/or detected error of the component by the automatic optical inspection device. Therefore, a minimization of the pseudo error is provided.

In another embodiment a standard deviation and/or mean of the features are taken into consideration by the electronic computing device. In particular, the actual measured feature value $x_{i,j}$ of the $j^{th}$ feature in each measurement its taken as is, but is normalized prior to the training by the statistics of the data giving for the corresponding test-pattern:

$$v_{i,j} = \frac{x_{i,j} - \mu_{t,j}}{\sigma_{t,j}}$$

, where $\mu_{t,j}$ is the mean and $\sigma_{t,j}$ is the standard deviation of the feature j of test-pattern t. Therefore, the pseudo error can be minimized.

In another embodiment zero-padding is used for padding the received data. In particular, where there is no information in the data about the features, the slots are filled with zeros. Therefore, an easy way for generating the data vector is provided.

In another embodiment the neural network ignores paddings during the analyzation of the data vector. In particular, the neural network is configured to ignore zero-paddings. Therefore, the neural network can analyze the data, but ignores data, which is not relevant, in particular the padding itself. Therefore, an improved analyzation of the electronic component is provided.

In another embodiment, the neural network comprises at least a feature encoder for encoding semantics of features. The feature encoder produces an encoding that describes semantics of the feature, in particular without the value, in a latent u-dimensional space, where the size of this space is a hyperparameter. The feature values are also encoded. Therefore, the electronic component can be monitored in improved manner.

In another embodiment, the neural network comprises at least a value encoder for encoding values of features. The feature values may be also encoded by the value encoder. This improves the monitoring of the electronic component.

In another embodiment, each result of the feature encoder and the value encoder are concatenated and transmitted to a feature and value encoder. In particular, the outputs of the feature and values encoders are then concatenated and passed to a feature and value encoder that fuses the ingested encodings into a z-dimensional encoding. The value of that is a hyperparameter of the model. Note that the output of this encoder is still containing a variable set of features for each measurement and the paddings. To fuse the information from all features of a measurement the measurement encoder may be also applied which uses the input mask arrays to exclude the padding during fusion. The result is a single q-dimensional vector representation for each measurement. The value of q is also a hyperparameter.

In particular, the method is a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Furthermore, the invention relates to a monitoring system for monitoring a production of an electronic component, comprising at least one electronic computing device, wherein the monitoring system is configured for performing a method according to the preceding aspect. In particular, the method is performed by the electronic computing device.

The electronic computing device may comprise electronic means, for example processors, circuits, in particular electronic circuits, and further electronic means for performing a method according to the preceding aspect. The electronic computing device may also be regarded as a computing unit. A computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Advantageous forms of the method are to be regarded as advantageous forms of the computer program product, the computer-readable storage medium, as well as the monitoring system. The monitoring system therefore comprises means for performing the method.

For use cases or use situations which may arise in the method and which are not explicitly described here, it may be provided that, in accordance with the method, an error message and/or a prompt for user feedback is output and/or a default setting and/or a predetermined initial state is set. Independent of the grammatical term usage, individuals with male, female or other gender identities are included within the term.

Further features of the invention result from the claims, the figures and the figure description. The features and combinations of features mentioned above in the description, as well as the features and combinations of features mentioned below in the figure description and/or shown alone in the figures, can be used not only in the combination indicated in each case, but also in other combinations without departing from the scope of the invention.

The invention will now be explained in more detail with reference to preferred examples of embodiments and with reference to the accompanying drawings.

Therefore:

FIG 1 shows a schematic block diagram according to a data representation according to an embodiment of the method;

FIG 2 shows a schematic block diagram according to an embodiment of a monitoring system; and

FIG 3 another schematic block diagram according to an embodiment of the method.

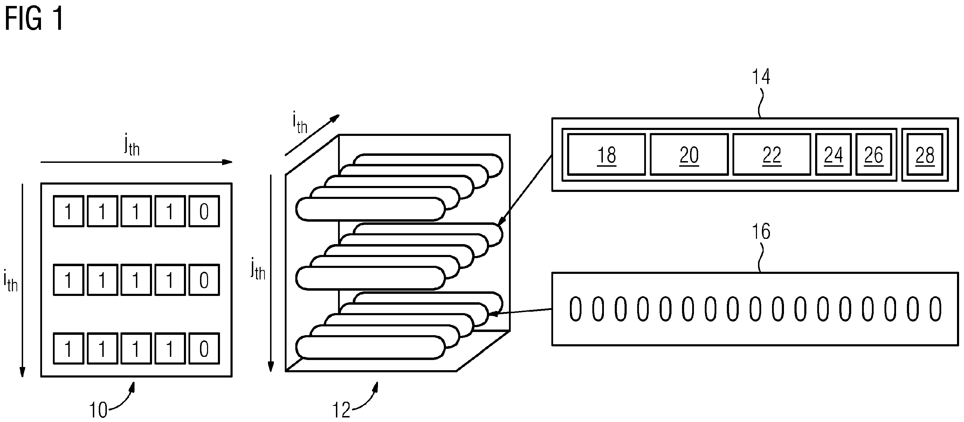

FIG 1 shows a schematic block diagram according to a data representation according to an embodiment of the method.

In particular FIG 1 shows a mask 10, an input array 12, a data vector 14 as well as a so-called padding 16.

In particular, the data vector 14 comprises a rotation embedding 18, a component embedding 20, an AOI error embedding 22, a feature mean 24, a feature standard deviation 26 as well as a feature value 28.

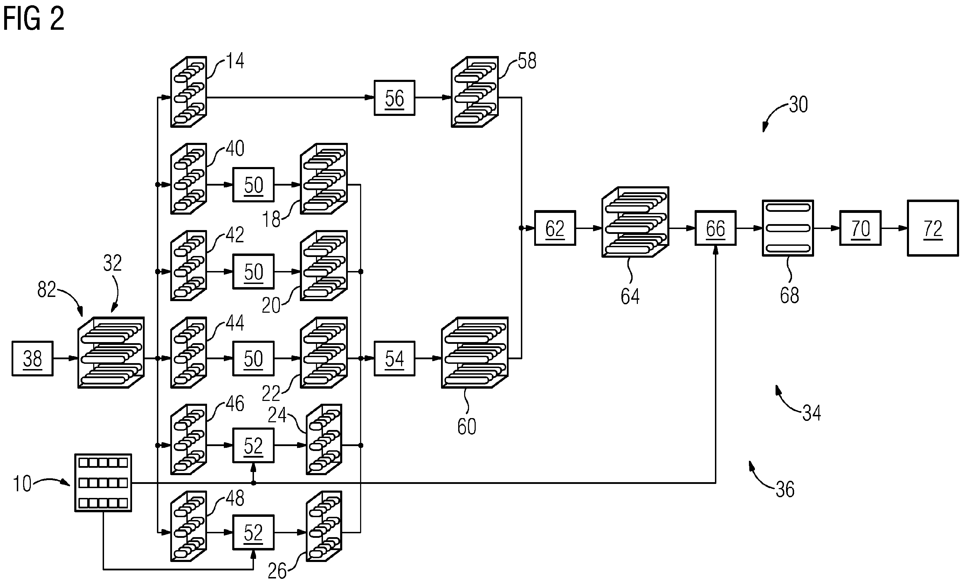

FIG 2 shows an embodiment according to a monitoring system 30. In particular, FIG 2 shows that the monitoring system 30 may be provided as an electronic computing device 34 comprising at least a neural network 36.

In particular FIG 2 shows a method for monitoring a production of an electronic component 38 by the monitoring system 30. Data 32, in particular raw data 32, from an automatic optical inspection device 82 are received by the electronic computing device 34, wherein the data 32 comprises a plurality of features describing the electronic component 38. The neural network 36 is provided by the electronic computing device 34, wherein the neural network 36 is configured for calculating data with a preset size. The size of the received data 32 is determined by the electronic computing device 34. The determined size of the data 32 is compared with a preset size for data for the neural network 36 by the electronic computing device 34. The received data are padded such that the data vector 14 is generated in the size of the preset size by the electronic computing device 34. The mask 10 is generated by the electronic computing device 34, wherein the mask 10 describes the data vector 14 concerning the received data 32 and the padding 16. The data vector 14 is transmitted to the neural network 36 as well as the mask 10. The electronic component 38 is analyzed depending on the data vector 14 by the neural network 36 and the electronic component 38 is monitored depending on the analyzation.

In particular FIG 2 shows that the data 32 may comprise data about a rotation 40, a component type 42, an AOI-result 44, a feature-mean information 46 as well as a feature standard deviation information 48. In particular the rotation 40 may be encoded to the rotation embedding 18, the component type 42 may be encoded to the component embedding 20, the AOI-result 44 may be encoded to the AOI error embedding 22, the feature-mean information 46 may be normalized to the feature-mean 24 and the feature standard deviation information 48 may be normalized to the feature standard deviation 26. In particular, the encoding is presented with a block embedding 50 and the normalization is presented with a normalization block 52. The rotation embedding 18, the component embedding 20, the AOI error embedding 22, the feature mean 24 and the feature standard deviation 26 are transmitted to a feature encoder 54. The feature values 14 are transmitted to a value encoder 56. The results 58, 60 of the feature encoder 54 and the value encoder 56, are transmitted to a feature and value encoder 62. The result 64 of the feature and value encoder 62 is transmitted to a measurement encoder 66, wherein the measurement encoder 66 also takes the mask 10 into consideration. The result 68 of the measurement encoder 66 is transmitted to a classifier 70, wherein the classifier 70 classifies the electronic component 38 as erroneous or non-erroneous, which is shown with a classification block 72. In particular, by taking into consideration the result of the AOI-machine, the classifier 70 classifies the result of the AOI machine as a pseudo error or a real error.

According to the shown embodiment, in a first step the input batch array is split into the individual components, feature value 14 (continuous), rotation 40 (discrete), component-type 42 (discrete), AOI result 44 (discrete), feature-mean 46 (continuous) and feature-standard-deviation 48 (continuous). The feature value 14 is passed through the value encoder 56. The discrete data is passed through an embedding layer, which is an embedding layer resulting in a d-dimensional embedding vector. The size of value is a hyperparameter of the model. The feature statistics (mean and standard deviation) are passed through a Batch Norm layer to normalize them. Note that the mask 10, which is in particular a mask array, is also processed to ignore the paddings 16 during normalization. The embedded discrete data and the normalized feature mean, and standard deviation values are then concatenated and processed by the feature encoder 54. This feature encoder 54 produces an encoding that describes semantics of the feature, in particular without the value, in a latent u-dimensional space, where the size of this space is a hyperparameter. The feature values 14 are also encoded by the value encoder 56. The outputs of the feature encoder 54 and the value encoder 56 are then concatenated and passed to the feature and value encoder 62 that fuses the ingested encodings into a z-dimensional encoding. The value of z is a hyperparameter of the model. Note that the output of this encoder is still containing a variable set of features for each measurement and the paddings 16. To fuse the information from all features of a measurement the measurement encoder 66 is applied which uses the input mask arrays to exclude the padding 16 during fusion. The result is a single q-dimensional vector representation for each measurement. The value of q is also a hyperparameter.

The feature encoder 54 consists of sequence of fully-connected neural network layers which is applied feature-wise, meaning on the data of each feature. In the shown embodiment a single fully-connected layer with a ReLU activation function $u_{i,j} = \max(0, f_{i,j}W_u^T + b_u)$ is used, where $f_{i,j}$ is the concatenated and encoded data of the feature and $W_u$ and $b_u$ are the learnable parameters of the neural network layer.

The value encoder 56 consists of sequence of fully-connected neural network layers which is applied feature-wise, meaning that the layer is applied on each value individually. In the shown embodiment a single fully-connected layer with a ReLU activation function $r_{i,j} = \max(0, v_{i,j}W_r^T + b_r)$ is used, where $v_{i,j}$ is the normalized feature value and $W_r$ and $b_r$ are the learnable parameters of the neural network layer.

The feature and value encoder 62 consists of sequence of fully-connected neural network layers which is applied feature-wise, meaning that the layer is applied on each value individually. In the shown embodiment a single fully-connected layer with a ReLU activation function $z_{i,j} = \max(0, g_{i,j}W_z^T + b_z)$ is used, where $g_{i,j}$ is the concatenation of the feature encoding and the value encoding and $W_z$ and $b_z$ are the learnable parameters of the neural network layer.

The measurement encoder 66 fuses the feature and value encodings $z_{i,j}$ of all features j into a single encoding $q_i$ which representing the data the ith measurement in a fixed sized encoding.

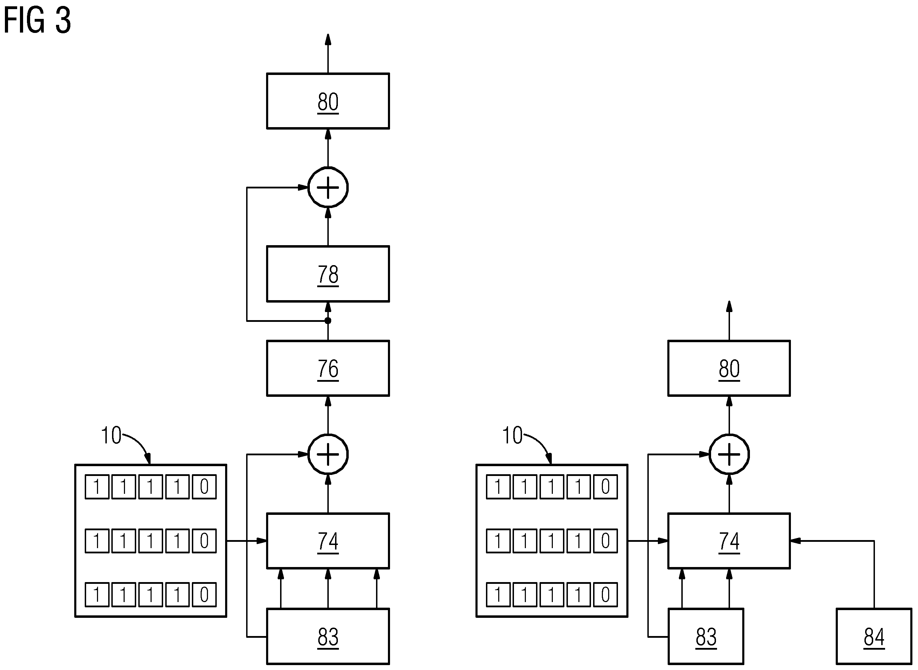

Three different architectures for this encoder may be proposed, a Mean encoding: $q_i = \frac{1}{M}\sum_{j=0}^{M-1} z_{i,j}$ and a Max encoding: $q_{i,k} = \max_{j \in \{0,1,...,M-1\}} z_{i,j,k}$; or a Attention based encoding: First the set of feature encodings and the corresponding masks are passed optionally multiple blocks of self-attention based encoding layers (see Figure 3, left). Finally, the measurement encoder employs a cross-attention module with a learned query ξ to fuse the passed feature and value encodings (see Figure 3, right).

The classifier 70 consists of sequence of fully-connected neural network layers. In the shown embodiment a stack of two fully-connected layers $p_i = \sigma(\max(0, q_iW_a^T + b_a)W_c^T + b_c)$ is

shown, where $q_i$ is the encoding of the measurement, $W_a$ and $b_a$ are the learnable parameters of the first neural network layer and $W_c$ and $b_c$ are the learnable parameters of the second neural network layer. $\sigma$ is the logistic function which produces the confidence values {

$$p_i \in \mathbb{R} \mid 0 \leq p_i \leq 1$$ }.

Note that the padding and masking is generally only required when data of multiple boards should be processed by the neural network 36 at once. A typical requirement by the optimization process applied to train the downstream neural network-model. However, also during interference it can make sense to batch data of multiple boards to improve the runtime.

FIG 3 shows another schematic block diagram according to an embodiment of the method. In particular, on the left side of FIG 3 a so-called self-attention block is shown and on the right side a cross-attention block is shown. The self-attention block comprises a multi-head attention 74, a layer normalization 76, a dense layer 78 as well as a layer normalization 80. Furthermore, FIG 3 shows feature and value encodings 83 for the multi-head attention 74 and a learned query 84.

**Claims**

1. A method for monitoring a production of an electronic component (38) by a monitoring system (30), comprising the steps of:

   - receiving data (32) from an automatic optical inspection device (82) by an electronic computing device (34) of the monitoring system (30), wherein the data (32) comprise a plurality of features describing the electronic component (38) ;
   - providing a neural network (36) by the electronic computing device (34), wherein the neural network (36) is configured for calculating data with a preset size;
   - determining the size of the received data (32) by the electronic computing device (34);
   - comparing the determined size of the data with the preset size for the neural network (36) by the electronic computing device (34);
   - padding the received data (32) such that a data vector (14) is generated in the size of the preset size by the electronic computing device (34);
   - generating a mask (10) by the electronic computing device (34), wherein the mask (10) describes the data vector (14) concerning the received data (32) and the padding (16);
   - transmitting the data vector (14) and the mask (10) to the neural network (36);
   - analyzing the electronic component (38) depending on the data vector (14) by the neural network (36); and

   - monitoring the electronic component (38) depending on the analyzation.

2. A method according to claim 1, wherein the electronic component (38) is analyzed in such that the electronic component (38) is classified in an erroneous component or in a non-erroneous component.

3. A method according to claim 1 or 2, wherein a classification of the automatic optical inspection device (82) is taken into consideration by the electronic computing device (34).

4. A method according to claim 3, wherein just an electronic component (38), which is classified from the automatic optical inspection device (82) as erroneous, is analyzed by the electronic computing device (34).

5. A method according to any of claims 1 to 4, wherein the received data (32) is encoded before determining the size of the received data (32).

6. A method according to claim 5, wherein the received data (32) is encoded considering at least a rotation (40) of the electronic component (38) and/or a component type (42) and/or a detected error of the component by the automatic optical inspection device (82).

7. A method according to any of claims 1 to 6, wherein a standard deviation (48) and/or a mean (46) of the features are taken into consideration by the electronic computing device (34).

8. A method according to any of claims 1 to 7, wherein zero-padding is used for padding (16) the received data (32).

9. A method according to any of claims 1 to 8, wherein the neural network (36) ignores paddings (16) during the analyzation of the data vector (14).

10. A method according to any of claims 1 to 9, wherein the neural network (36) comprises at least a feature encoder (54) for encoding semantics of features.

11. A method according to any of claims 1 to 10, wherein the neural network (36) comprises at least a value encoder (56) for encoding values of features.

12. A method according to claims 10 and 11, wherein each result (58, 60) of the feature encoder (56) and the value encoder (54) are concatenated and transmitted to a feature and value encoder (62).

13. A computer program product comprising program code means for performing a method according to any of claims 1 to 12.

14. A computer-readable storage medium comprising at least the computer program product according to claim 13.

15. A monitoring system (30) for monitoring a production of an electronic component (38), comprising at least one electronic computing device (34), wherein the monitoring system (10) is configured for performing a method according to any of claims 1 to 12.

FIG 1

FIG 2

EP 4 451 075 A1

FIG 3

Europäisches
Patentamt

European
Patent Office

Office européen
des brevets

# EUROPEAN SEARCH REPORT

Application Number

EP 23 16 8962

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 020 314 A1 (SIEMENS AG [DE]) 29 June 2022 (2022-06-29) | 1-5,8, 13-15 | INV. G05B19/418 |
| A | * paragraph [0009] - paragraph [0083] * ----- | 6,7,9-12 | G06N3/04 |
| A | US 2023/053878 A1 (BÖNIG JOCHEN [DE] ET AL) 23 February 2023 (2023-02-23) * paragraph [0036] - paragraph [0087] * ----- | 1-15 | |
| A | KIM JUNGSUK ET AL: "Printed Circuit Board Defect Detection Using Deep Learning via A Skip-Connected Convolutional Autoencoder", SENSORS, vol. 21, no. 15, 21 July 2021 (2021-07-21) , page 4968, XP055883024, DOI: 10.3390/s21154968 * the whole document * ----- | 1-15 | |

|  |
|---|
| TECHNICAL FIELDS SEARCHED (IPC) |
| G05B |
| G06N |
| G06T |
| H05K |
| G01N |

The present search report has been drawn up for all claims

| Place of search | Date of completion of the search | Examiner |
|---|---|---|
| The Hague | 21 September 2023 | Cîrîc, George |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 8962

21-09-2023

| Patent document cited in search report | | Publication date | Patent family member(s) | | Publication date |
|---|---|---|---|---|---|
| EP 4020314 | A1 | 29-06-2022 | CN | 116783625 A | 19-09-2023 |
| | | | EP | 4020314 A1 | 29-06-2022 |
| | | | EP | 4233500 A1 | 30-08-2023 |
| | | | WO | 2022135787 A1 | 30-06-2022 |
| US 2023053878 | A1 | 23-02-2023 | CN | 115908236 A | 04-04-2023 |
| | | | EP | 4138032 A1 | 22-02-2023 |
| | | | KR | 20230026289 A | 24-02-2023 |
| | | | US | 2023053878 A1 | 23-02-2023 |

EPO FORM P0459

For more details about this annex : see Official Journal of the European Patent Office, No. 12/82